# EUROPEAN PATENT APPLICATION

(11) **EP 2 009 920 A1**
(43) Date of publication of application: **31.12.2008**
(21) Application number: 07290796.7
(22) Date of filing: 27.06.2007
(51) Int. Cl.: H04N 7/173

(54) **A community server with content correlation function and related service delivery method**

(71) Applicant: Alcatel Lucent, 75008 Paris (FR)
(72) Inventor: Moons, Jan Lode Mia, 2220 Heist-op-den Berg (BE); Hemmeryckx-Deleersnijder, Bart, 3001 Heverlee (BE)
(74) Representative: Plas, Axel Ivo Michel

(57) **Abstract**

In a service delivery network with community awareness, a community server (104) according to the invention is able to inform (116) a user (101) requesting (111) a service on present buddies that are simultaneously experiencing services with similar content. The community server (104) thereto correlates (115) the content of the requested service with content of services simultaneously used by community buddies of the user (101) requesting (111) the service. The correlation may for instance be based on metadata associated with the content of services.

## Description

### Field of the Invention

The present invention generally relates to service delivery platforms with community awareness. An example thereof is an Internet Protocol Television (IPTV) delivery platform that is enriched with an interactive broadband platform maintaining presence of a community of a viewer, and enabling interactive communications and messaging between the viewer and his community. The viewer's community is a list of buddies such as friends, family members, colleagues, school mates, etc.

### Background of the Invention

In the white paper "AmigoTV: A Social TV Experience Through Tripte-Play Convergence", retrievable via the URL www.telecomreview.ca/epic/site/tprp-gecrt.nsflvwapj/AmigoTV.pdf/$FILF-/AmigoTV.pdf, Alcatel describes a digital TV service delivery platform that is enhanced with AmigoTV for community support. Community support or community awareness refers to the functionality enabling social networking with a community of buddies while watching digital TV. The social networking may involve chatting on the TV content that is watched, showing TV channel presence on buddies' TV screens, sharing multimedia messages, conducting a voice or video conference, inviting a friend, sharing calendar information, sharing emotions through avatars, i.e. a graphical representation of a person, personality and mood, etc. The social networking runs on broadband technology such as any Digital Subscriber Line (xDSL) technology, coax, optical or wireless broadband access technology. In addition, AmigoTV has a community manager to maintain and manage the buddy lists, a session manager that sets up the ad-hoc online communities wherein people can interact and update their presence status, messaging middleware enabling instant messaging between buddies, a web server storing content such as avatars and emoticons, and a Real-time Transport Protocol (RTP) reflector for audio/video conferencing and chatting.

Although AmigoTV introduces community awareness, it provides a TV viewer only with a presence list of buddies and an indication of the TV channels that the present buddies are watching. A TV viewer watching certain TV content may wish to communicate with buddies that are also watching that Type of content but not necessarily the same TV channel For instance, a TV viewer watching a soccer game may wish to chat with a buddy who is watching another soccer game on a different TV channel, In order to do so with AmigoTV, ths TV viewer would have to consult the buddy presence list, the information indicative for the channel these buddies are watching, and the TV program guide (e.g. the Electronic Program Guide or EPG) in order to retrieve which buddies are simultaneously watching soccer. Such manual lookup is cumbersome, time-consuming and user-unfriendiy for the TV viewer, and consequently may refrain the TV viewer from using the AmigoTV application.

It is therefore an objective of the present invention to provide a solution for a service delivery network with community awareness that enables users of a service to connect and interactively communicate with buddies that are experiencing services with similar content, e.g. the same type of TV programme, the same genre of movie, the same actors, the same sport or sports team, etc.

### Summary of the Invention

According to the present invention, the above objective is realized and the disadvantages of the prior art Amigo TV solution are dissolved through a community server for use in a service delivery network with community awareness, as defined by claim 1, comprising:
correlation means adapted to correlate content of a requested service with content of services simultaneously experienced by community buddies of a user requesting the requested service; and
informing means, responsive to the correlation means and adapted to provide the user with information indicative for community buddies of the user that are simultaneously experiencing a service with content similar to the requested service.

Thus, according to the invention, a community server will provide a first user requesting a service, e.g. a BCTV channel, a VoD item, a TSTV item, ... with a view on buddies of that first user that are simultaneously watching similar content. Thereto, the community server correlates the content or information indicative for the content requested by the first user with the content or information indicative for the content that is being watched or experienced by community buddies of the first user. By presenting the first user a view on these buddies, the first user is enabled to instantly establish an interactive communication session with one or more of these buddies, using for instance the known AmigoTV platform functionality.

It is noticed here that services in the context of an IPTV platform enriched with AmigoTV may comprise digital TV applications such as Broadcast Television (BCTV), Time-Shifted Television (TSTV), Video-on-Demand (VoD), but in the context of the present invention must be interpreted more generally to comprise any media or multi-media delivery service such as audio streaming, world wide web consultation, gaming, file downloading, etc. The content of such service is the actual subject-matter of the requested service and may for instance be represented by the theme, plot, location, author(s), team, title, genre, or any other kind of information that is indicative for the subject-matter of the service.

An optional feature of the community server according to the present invention, defined by claim 2, implies that the correlation means are adapted to compare metadata associated with the requested service and metadata associated with the services simultaneously used by the community buddies.

Thus, in a first embodiment of the community server according to the invention, correlating the contents of a service requested by a user with the contents of the services experienced by his/her buddies involves comparing the metadata. The metadata are data about data, or information about content. Examples of metadata are for instance the title, genre (are standardized ontologies), the actors and the director of a movie. In alternative embodiments, parts of the contents itself may be compared or correlated, information available through the Electronic Program Guide (EPG) may be correlated, information made available through the content manager may be correlated, etc. Since metadata are concise and certain metadata are designed or chosen to describe the contents or an aspect of the contents of the data they are related to, correlating the metadata has the advantage that it enables the community server according to the present invention to rapidly produce the view on buddies that are simultaneously watching, or more general, experiencing similar services content-wise.

Further optionally, as defined by claim 3, the community server according to the present invention may produce a list of names of community buddies simultaneously experiencing a service similar to the requested service.

Thus, the information indicative for buddies experiencing the same or similar content may be a list of buddy names that is displayed for instance on a viewer's television screen. By selecting one of the names in the displayed buddy list, an interactive communication session between the viewer and the selected buddy may be setup immediately. Alternatively, a list of buddy names together with an indication of the service or content currently experienced may be displayed. Yet another alternative would involve displaying a list of all similar content that is being watched or experienced, e.g. a list of the TV channels that simultaneously broadcast soccer games, and mentioning the number of buddies that is watching or experiencing this content. By selecting the number, the viewer would then automatically and immediately setup an interactive communication session with all buddies watching that particular content.

Another optional aspect of the community server according to the present invention is that an embodiment of this community server may comprise filtering means adapted to filter the information before providing the information to the user, as is indicated by claim 4.

The filtering may for instance enable the user requesting a particular service to identify one or more buddies that he/she does not want to show up in the list of buddies experiencing similar content. In case an IPTV viewer is watching a soccer game, he may for instance indicate that he desires to be informed on his buddies that are online, that are simultaneously watching soccer, but exclude his parents in law from showing up in the buddy list.

Yet another optional feature of the community server according to the present invention, defined by claim 5, concerns the presence therein of auto-grouping means adapted to automatically group buddies in relation to content of services experienced by the buddies.

Thus, buddies may be grouped automatically on the basis of for instance their user or interest profile, the type of content they regularly watch, the content presence or channel presence, etc. This way, the invention enables the viewer of for instance a soccer game, to restrict sharing his presence only with buddies he associates with soccer, e.g. soccer fans within his circle of friends. For all other buddies, presence of the viewer will be hidden. The degree to which users are present towards their community in other words may be content-driven.

Still an option of the community server according to the present invention, is that it may comprise interfacing means adapted to interface with a user profile server, a voting server, a content manager, and/or a community manager, as is indicated by claim 6.

From the profile server, the community server obtains for example information indicative for the viewing profile of a user. Such viewing profile may contain information indicative for the contents where the viewer is interested in, e.g. soccer or Belgian soccer, or soccer club Chelsea, etc., and may be updated automatically depending on the contents consulted by the viewer.

In voting applications for instance, the current invention may be used to auto-group and start a community within the scope of people that voted for the same item or person as the user. If for instance a TV viewer is voting for the same Big Brother participant in every episode, the TV viewer may be auto-listed with the group of Big Brother fans, more specifically as a fan of that particular Big Brother participant. This way, content based communities can be generated and auto-mapped.

The community server may further interface with a content manager in order to retrieve content information from such manager that is useful for the correlation task it has to perform. The community server may also interface with the community manager from which it is expected that the community server shall obtain presence information on the buddy list.

As is indicated by claim 7, the community server according to the present invention may be integrated in a community manager.

Thus, as alternative to a stand-alone community server with content correlation function, the community server according to the present invention may form integral part of the community manager.

In addition to a community server with content correlation capabilities, the current invention relates to a service delivery method as defined by claim 8, the service delivery method running in a service delivery network with community awareness, and comprising the steps of:
a. a user contacting a content manager and identifying a requested service to be delivered;
b. the content manager informing a community manager on the requested service,
c. the community manager verifying if a community server is registered;
d. the community manager informing the community server on presence of community buddies of the user,
e. the community server correlating content of the requested service with content of services simultaneously used by present community buddies of the user; and
f. the community server informing the user on community buddies of the user that are simultaneously using a service with content similar to the requested service.

### Brief DescriPtion of the Drawing(s)

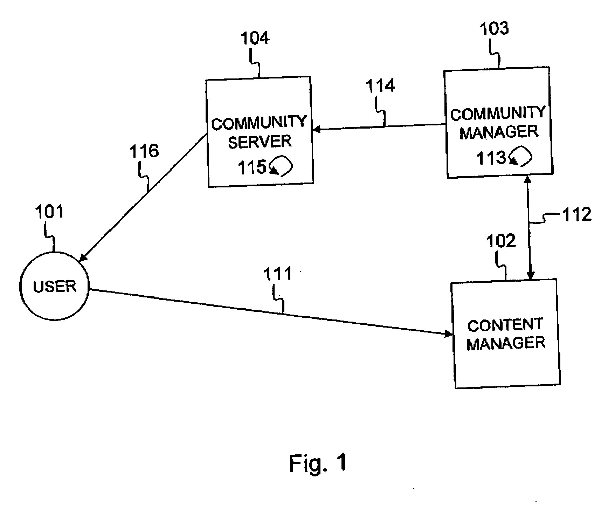

Fig. 1 illustrates a service delivery network with community awareness incorporating an embodiment of the community server 104 according to the present invention.

### Detailed Description of Embodiment(s)

To offer the solution to AmigoTV (or other content/community) users. Two correlation engines are defined. Both engines can be build/offered as a server (standalone) or as integrated module on the community manager and content manager of the content community application.

Fig. 1 illustrates one possible implementation of the present invention. The LPTV platform that is drawn in Fig. 1 has a content manager 102 that maintains information related to the content of video items and TV channels that can be requested in the IPTV system. The content manager 102 for instance stores metadata on the video items and TV channels. The IPTV platform illustrated by Fig. 1 in addition has a community manager 103 whose task it is to maintain and manage information on the communities. This involves for instance maintaining buddy lists of the different users and maintaining presence information on the buddies in the buddy lists. In addition to the content manager 102 and the community manager 103, the IPTV platform of Fig. 1 contains a community server 104, able to interface with the community manager 103 and the content manager 102, and able to correlate the content of a video item requested by a user with the content of video items watched simultaneously by present buddies of the user. An example scenario where a user 101 of the IPTV system depicted in Fig. 1 is requesting a video item, and where this user in addition to the requested video item also receives a list of present buddies that are simultaneously watching video items with similar content, will be described in detail in the following paragraphs.

As is indicated by arrow 111 in Fig. 1, the user 101 initially selects a video item he/she desires to watch, for instance the soccer game Baroolona-Vallodolid. The request is sent to the content manager 102, which further locates the requested video item and instructs the servers and or streaming nodes in the IPTV platform to deliver the requested soccer game to a client terminal of user 101, e.g. the Set-Top Box (STB). It is noted that the requested video item may be a single item stored in a video server or video warehouse (either centrally or distributed), and delivered in Vdeo-on-Demand (VoD) mode to the user 101 through unicast. The video item alternatively may be a Broadcast Television (BCTV) channel in which case user 101 will join the multicast tree through which the BCTV channel is multicasted and will start to watch the TV show that is broadcasted at the time of request. Other examples of video items that may be requested by user 101 are a Time-Shifted Television (TSTV) item, a Near-Video-on-Demarvd (NVOD) item, the Electronic Program Guide (EPG), etc.

Upon receipt of the user's request in step 111, the content manager 102 sends an event to the community manager 103, thereby updating the community state in the latter community manager 103. In this particular example, the content manager 102 shall for instance inform the community manager 103 that user 1 is present. As an alternative to the content manager 102 updating the community manager 103 each time a user request is received, the community manager 103 itself may regularly poll the content manager 102 for updates on the presence of users. The step of updating the community manager 103, either on initiative of the content manager 102 each time a request is received or on initiative of the community manager 103 through regular polling is indicated by the double arrow 112 in Fig. 1. Obviously, a combination of updates sent by the content manager 112 and regular polls by the community manager 103 is feasible as well.

As is indicated by arrow 113, the community manager 103 checks if a community server with content correlation capacities is registered, and if so, forwards the presence state of the community buddies of user 101 to that community server. In case of Fig. 1, it is assumed that community server 104 is registered with community manager 103 as a result of which the community manager 103 forwards the presence state of the buddies of user 101 to the community server 104. This is indicated by arrow 114.

The community server 104 now applies state of the art correlation algorithms to correlate the content of the video item requested by user 101 with the content of video items currently watched by the buddies of user 101 in order to build a filtered presence view for user 101. This is indicated by arrow 115. The community server 104 thereto may request input from a user profile server not drawn in Fig. 1, a voting server not drawn in Fig. 1, the community manager 103, and the content manager 102. The user profile server can supply user profile data indicative for user preferences or content interest, such that buddies that are present and generally interested in the content that is requested by user 101 can be included in the filtered presence view that is built by the community server 104. The voting server may supply voting profiles of present buddies of user 101 such that buddies with a similar voting profile can be included in the filtered presence view that is built by the community server 104. The community manager 103 can supply presence information and buddy lists in relation to user 1. This may be done automatically, e.g. in step 114, or it may be done taking into account preferences specified by the user 101. In the above example where the user 101 requests to watch the soccer game Barcelona-Vallodolid, the user 101 may indicate that he/she wishes to be informed on the soccer buddies that are on-line with exception of his/her parents in law. The community server 104 will then generate in step 115 a filtered view of the buddies of user 101 watching the same game, the buddies of user 101 with preference for soccer in their user profile, and the buddies of user 101 with whom soccer was watched in the past. The community manager 103 however will not share presence information on the parents in law with community server 104 since the user 101 desires to remain hidden for them. In a second example, the user 101 upon requesting the soccer game Barcelona-Vatiodolid may indicate that he/she desires to be present only towards the other Barcelona game watchers. This can be buddies of user 101 watching the game Barcelona-Vallodolid, buddies of user 101 watching an archived Barcelona game, and buddies of user 101 watching another live Barcelona game, e.g. from the junior league. Thus, as a result of the present invention, the content watched shall rather define the degree to which a user desires to be present towards his community. The content manager 102 at last can supply content related information such as metadata, information extracted from the Electronic Program Guide (EPG), etc. further enabling the community server 104 to correlate content watched by present buddies of user 101 with the content requested by user 101 in step 111.

Lastly, as is indicated by arrow 116, the user 101 is offered the filtered view on present buddies that watch or are interested in content similar to the content requested by user 101 in step 111. This filtered view may be displayed as a list of buddies on the TV screen of user 101. By selecting the buddies in the filtered view, user 101 may start an interactive communication session with one or more of these buddies, e.g. an audio conference, a text chat session, etc. The interactive communication session may be initiated over state of the art technology such as the Alcatel AmigoTV platform cited in the introductory part of this patent application.

Summarizing, the current invention extends the TV community presence system with the capability to offer a filtered view on buddy presence based on the buddies current TV presence, the buddies past TV watching behavior, the buddies interest profiles and other content related information such as for instance the buddies voting profile. In this offering the end-user receives a managed view on his/her TV presence buddy list. The main advantage of the invention is that its offers a very important service towards the users of content delivery applications with community awareness. The ease of use and experience is augmented. The capability is ideal in setting up communities to engage in further interactive communication sessions with buddies.

Although described with reference to AmigoTV, it will be appreciated by the skilled person that applicability of the present invention is not restricted to AmigoTV. Another example platform where the invention could be applied with same advantages is the the MyOwnTV platform, advertised for instance in the article "Alcatel introduces new, personalized triple play IPTV applications" published on the Internet at URL www.home.atcatet.com/vpr/vpr.nsf/DateKey/04102005_1uk. The open channels in MyOwnTV, which are public searchable channels used for advertisement, public announcements, etc. for now are only searchable via text. The content community mapping capability according to the present invention can be integrated in a MyOwnTV platform to attract different end-users from a community towards a MyOwnTV channel. Other service delivery platforms such as gaming platforms, Internet search engines, file transfer platforms, etc. may also be enhanced with a community server with content correlation capabilities according to the present invention in order to offer the user requesting a service or media item a filtered view on community buddies that are concurrently consulting or experiencing similar content.

It is further remarked that the current invention also enables the IPTV system to auto-group a number of buddy relations. As a result, when a user is watching for instance a soccer match, he/she may have the option to indicate that only the community group (a group of buddies) normally associated with watching soccer (other soccer fans) is allowed to see the presence. For all other buddies, presence win be hidden. When the user later on switches to a soap opera type of program, his/her status will be hidden for the soccer buddies. In voting applications the invention can be used as a capability to auto-group (create a community group) people voted similar to the user. If for instance a user votes every Big Brother episode for the same Big Brother member, he/she may become auto-listed with the group of Big Brother fans and more specifically as a fan of the specific Big Brother member. This way, communities can be created and auto-mapped.

Another remark is that the skilled person will appreciate that the information indicative for the content and useful in the correlation that is key to the present invention, can be varying and is limited only by the imagination of the designers of the system. Examples are history information, actual program information, voting information, rating information, metadata, etc.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application, It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order.

## Claims

1. A community server (104) for use in a service delivery network with community awareness,
**CHARACTERIZED IN THAT** said community server (104) comprises:
correlation means adapted to correlate (115) content of a requested service with content of services simultaneously experienced by community buddies of a user (101) requesting (111) said requested service; and
informing means, responsive to said correlation means and adapted to provide (116) said user (101) with information indicative for community buddies of said user that are simultaneously experiencing a service with content similar to said requested service.

2. A community server (104) according to claim 1,
**CHARACTERIZED IN THAT** said correlation means are adapted to compare metadata associated with said requested service and metadata associated with said services simultaneously experienced by said community buddies.

3. A community server (104) according to claim 1,
**CHARACTERIZED IN THAT** said information comprises a list of names of community buddies simultaneously using a service similar to said requested service.

4. A community server (104) according to claim 1,
**CHARACTERIZED IN THAT** said community server (104) further comprises filtering means adapted to filter said information before providing said information to said user (101).

5. A community server (104) according to claim 1,
**CHARACTERIZED IN THAT** said community server (104) further comprises auto-grouping means adapted to automatically group buddies in relation to content of services experienced by said group buddies.

6. A community server (104) according to claim 1,
**CHARACTERIZED IN THAT** said community server (104) further comprises interfacing means adapted to interface with one or more of:
a user profile server
a voting server;
a content manager (102); and
a community manager (103).

7. A community server (104) according to claim 1,
**CHARACTERIZED IN THAT** said community server (104) is integrated in a community manager.

8. A service delivery method in a service delivery network with community awareness, said service delivery method comprising the steps of:
a. a user (101) contacting (111) a content manager (102) and identifying a requested service to be delivered;
b. said content manager (102) informing (112) a community manager (103) on said requested service,
**CHARACTERISED IN THAT** said service delivery method further comprises the steps of:
c. said community manager (103) verifying (113) if a community server (104) is registered;
d. said community manager (103) informing (114) said community server (104) on presence of community buddies of said user (101);
e. said community server (104) correlating (115) content of said requested service with content of services simultaneously experienced by present community buddies of said user (101); and
f. said community server (104) informing (116) said user (101) on community buddies of said user (101) that are simultaneously experiencing a service with content similar to said requested service.
